Europäisches Patentamt

European Patent Office

Office européen des brevets

(19)

(11) Numéro de publication: **0 250 956**
**A1**

(12) **DEMANDE DE BREVET EUROPEEN**

(21) Numéro de dépôt: **87108358.0**

(22) Date de dépôt: **10.06.87**

(51) Int. Cl.⁴ **F16F 9/36 , F16L 3/20**

(30) Priorité: **10.06.86 FR 8608371**

(43) Date de publication de la demande:
**07.01.88 Bulletin 88/01**

(84) Etats contractants désignés:
**DE ES FR GB IT SE**

(71) Demandeur: **VIBRACHOC, Société Anonyme dite:**
**Parc d'Activités de l'Eglantier C.E. 2804**
**Lisses**
**F-91028 Evry Cédex(FR)**

(72) Inventeur: **Le Pierres, Gildas**
**Les Rochettes D'Huison-Longueville**
**F-91590 La Ferte Alais(FR)**

(74) Mandataire: **Weinmiller, Jürgen et al**
**Lennéstrasse 9 Postfach 24**
**D-8133 Feldafing(DE)**

(54) Dispositif d'amortissement agissant selon les six degrès de liberté.

(57) La présente invention concerne un dispositif d'amortissement agissant selon les six degrés de liberté et comportant une enceinte (30) remplie d'un produit visqueux, une tige (10) solidaire d'un piston (20) logé dans l'enceinte et muni d'au moins au anneau (24) axialement lié à ce piston mais libre radialement par rapport à celui-ci, caractérisé en ce qu'il comporte au moins un anneau (36) axialement lié à l'enceinte mais libre radialement par rapport à celle-ci.

Application à l'amortissement de grosses tuyauteries.

FIG.1

## Dispositif d'amortissement agissant selon les six degrés de liberté.

La présente invention concerne un dispositif d'amortissement agissant selon les six degrés de liberté, ce dispositif étant particulièrement adapté à l'amortissement de grosses pièces mécaniques telles que des tuyauteries de centrales nucléaires par exemple.

D'une manière générale, dans un élément de suspension composé d'un ressort et d'un amortisseur, le ressort développe des efforts fonction de la déformation de l'élément, et l'amortisseur développe des efforts fonction de la vitesse de déplacement de la partie mobile de l'élément.

Dans le cas le plus simple, le ressort développe un effort proportionnel à la déformation, la constante de proportionnalité étant appelée raideur de l'élément, et l'amortisseur développe un effort proportionnel à la vitesse de déformation, la constante de proportionnalité étant appelée constante d'amortissement de l'élément.

Ainsi un élément de suspension composé d'une pièce en élastomère pouvant se déformer selon les six degrés de liberté de l'espace, est défini par six raideurs et six constantes d'amortissement. La proportion relative de ces deux paramètres varie suivant la nature de l'élastomère, ce qui signifie que l'augmentation d'amortissement ne peut se faire qu'avec apport de raideur.

On connaît, notamment par le document FR-A-2 255 508, un dispositif d'amortissement agissant selon les six degrés de liberté, qui permet d'augmenter la fonction d'amortissement sans augmenter porportionnellement la raideur, mais celle-ci reste cependant importante.

Ce dispositif d'amortissement comporte une enceinte remplie d'un produit visqueux, une tige solidaire d'un piston logé dans l'enceinte et muni d'au moins un anneau axialement lié à ce piston mais libre radialement par rapport à celui-ci, et une membrane élastomère qui assure un double rôle d'étanchéité et de maintien d'une pression interne dans les tous cas de fonctionnement.

Ce dispositif d'amortissement est totalement inadapté à l'amortissement d'objets qui doivent avoir une grande liberté de déplacement, donc présenter une raideur quasiment nulle et un apport d'amortissement capable de s'opposer aux vibrations, même si ces objets sont soumis à des mouvements dûs à une dilatation ou à une rétraction thermique de grande amplitude et de faible vitesse.

Le but de la présente invention consiste donc à augmenter notablement l'amortissement dans toutes les directions tout en supprimant pratiquement la raideur.

Ce but est atteint en remplaçant la membrane élastomère qui assurait un double rôle d'étanchéité et de maintien d'une pression interne dans tous les cas de fonctionnement, par un anneau qui assure seul le maintien de la pression interne dans seulement les cas de fonctionnement où le maintien de cette pression interne est obligatoire.

La présente invention a pour objet un dispositif d'amortissement agissant selon les sic degrés de liberté et comportant une enceinte remplie d'un produit visqueux, une tige solidaire d'un piston logé dans l'enceinte et muni d'au moins un anneau axialement lié à ce piston mais libre radialement par rapport à celui-ci, caractérisé en ce qu'il comporte au moins un anneau axialement lié à l'enceinte mais libre radialement par rapport à celle-ci.

Il est décrit ci-après, à titre d'exemple et en référence aux dessins annexés, un dispositif d'amortissement selon l'invention.

La figure 1 montre un premier mode de réalisation du dispositif de l'invention.

La figure 2 montre un deuxième mode de réalisation du dispositif de l'invention.

La figure 3 montre un troisième mode de réalisation dans lequel le dispositif est traversé de part en part par une tige.

La figure 4 montre une variante applicable aux trois modes de réalisation.

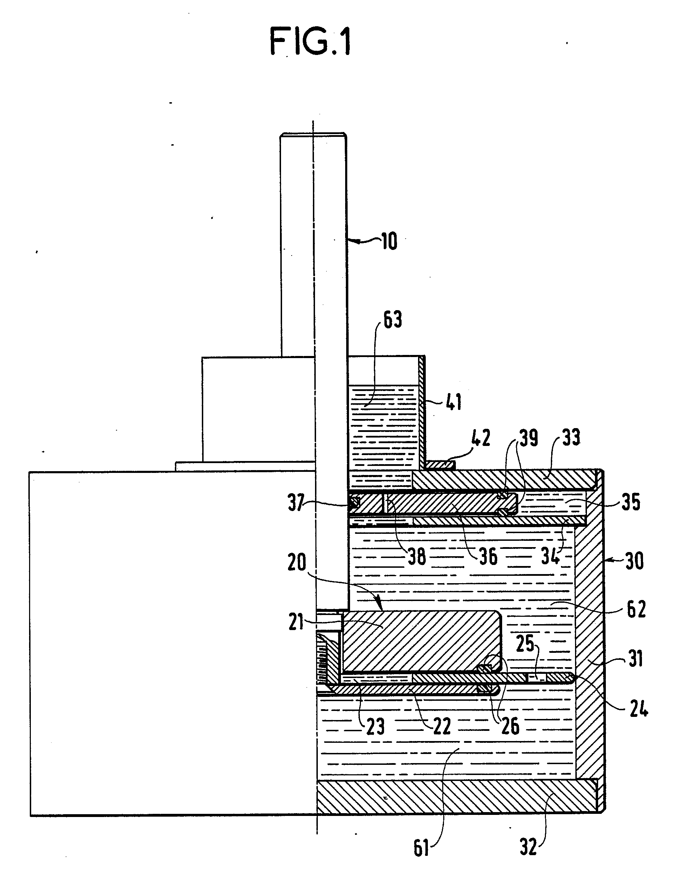

Selon la figure 1, le dispositif est constitué d'une tige 10 dont l'extrémité extérieure est reliée à une structure que l'on souhaite amortir, d'un piston 20 relié rigidement à l'autre extrémité de la tige 10 et enfin d'une enceinte 30 reliée à une autre structure, les deux structures étant reliées au dispositif par des liaisons non représentées, ces liaisons pouvant être rigides, souples ou articulées.

Le piston 20 est constitué d'au moins deux pièces cylindriques 21, 22 et d'un anneau 24. Les deux pièces cylindriques 21, 22 laissent subsister entre elles un espace libre 23 dans lequel est logé l'anneau 24. Les deux pièces cylindriques 21, 22 ne sont donc pas liées radialement à l'anneau 24, mais liées axialement à cet anneau, bien qu'il subsiste un jeu d'une valeur très faible correspondant au jeu de fonctionnement. Deux joncs 26 assurent ce jeu entre l'anneau 24 et les deux pièces cylindriques 21, 22.

Le piston 20 délimite deux chambres 61, 62 remplies d'un produit visqueux, par exemple une graisse, et l'anneau 24 comporte au moins un orifice 25 mettant en communication ces deux chambres 61, 62.

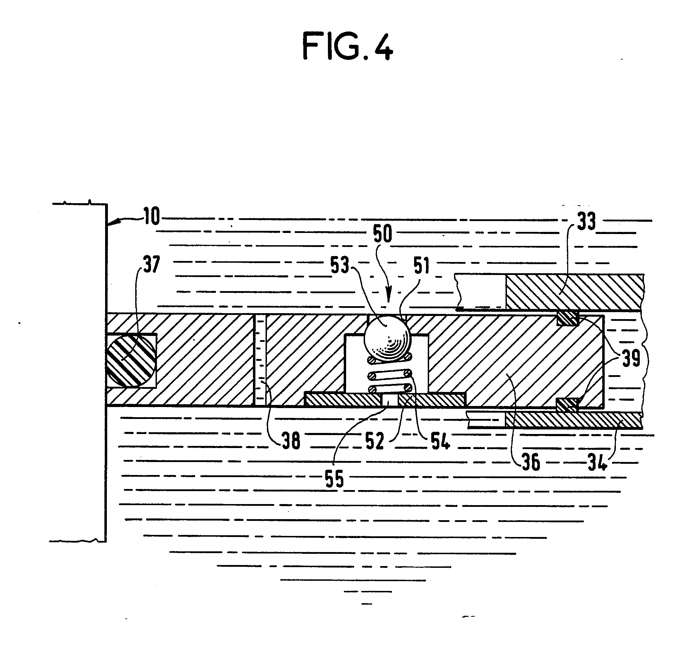

L'enceinte 30 est constituée par un cylindre 31, une plaque inférieure 32 fermant totalement le fond du cylindre 31, une plaque supérieure 33 fermant partiellement le haut de l'enceinte, une plaque intermédiaire 34, un anneau 36, la plaque supérieure 33 et la plaque intermédiaire 34 laissant subsister entre elles un espace annulaire 35 dans lequel est logé l'anneau 36. La plaque intermédiaire 34 peut être remplacée par un moyen quelconque, par exemple un ressort, pour maintenir l'anneau 36 contre la plaque supérieure 33. Deux joncs 39, mieux visibles en figure 4, maintiennent un jeu de fonctionnement entre l'anneau 36 et les deux plaques 33, 34. Cette plaque supérieure 33 comporte une excroissance 41 formant réservoir, maintenue par une bague 42, elle-même fixée sur la plaque 33 par un quelconque moyen de fixation connu. La plaque 33 et l'excroissance 41 peuvent être formées par une seule pièce.

L'anneau 36 sépare deux chambres distinctes, la chambre 62 décrite auparavant et une chambre 63 constituée par le réservoir 41. Cette chambre 63 n'est pas fermée dans sa partie supérieure, ce qui impose une mise en place verticale du dispositif pour éviter les pertes de produit visqueux.

L'anneau 36 porte un tore en élastomère 37 dont la fonction principale n'est pas d'assurer une étanchéïté mais d'autoriser une certaine liberté angulaire à la tige 10.

Bien entendu ce tore peut être remplacé par un autre moyen mécanique assurant cette fonction, une rotule par exemple.

L'anneau comporte également un ajutage 38 permettant une communication entre la chambre 62 et la chambre 63.

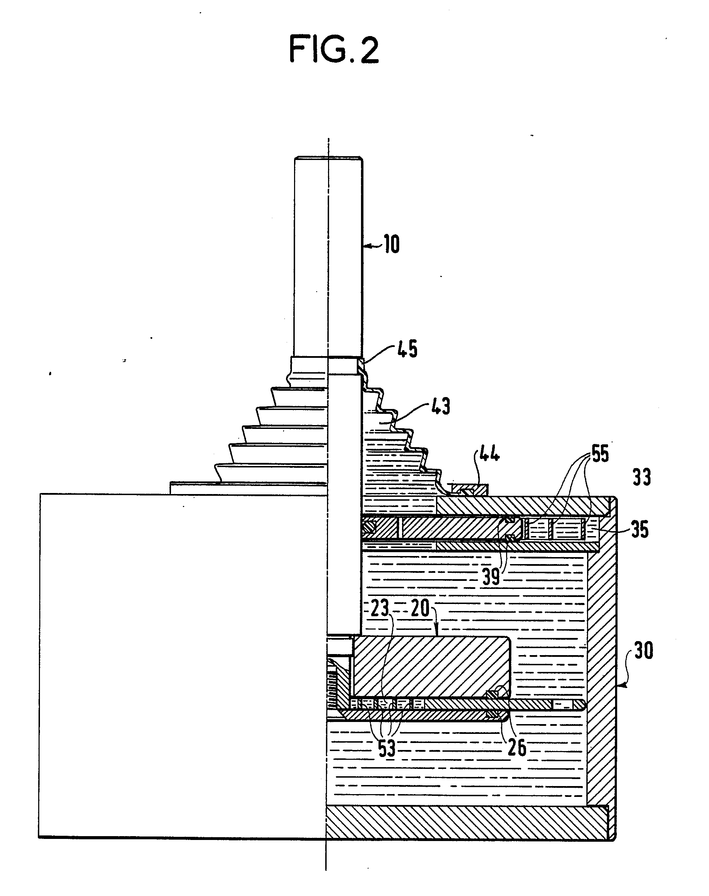

Selon la figure 2, le dispositif est constitué de la même façon, d'une tige 10, d'un piston 20 et d'une enceinte 30, mais contrairement au dispositif de la figure 1, celui-ci comporte une membrane souple 43 maintenue autour de la tige par un collier 45 et contre la plaque supérieure de l'enceinte par un anneau 44. Cette membrane 43 assure une étanchéïté de la chambre 63 et ce dispositif peut ainsi être employé dans n'importe quelle position sans craindre une fuite de produit visqueux.

Les espaces radiaux 23, 35 laissés libres par les anneaux contiennent des moyens de restriction respectivement 53, 55 constitués par des ressorts en spirale. Ces moyens de restriction obligent le produit visqueux à parcourir un plus long chemin. Bien entendu, le mode de réalisation de la figure 1 pourrait comporter de tels moyens de restriction.

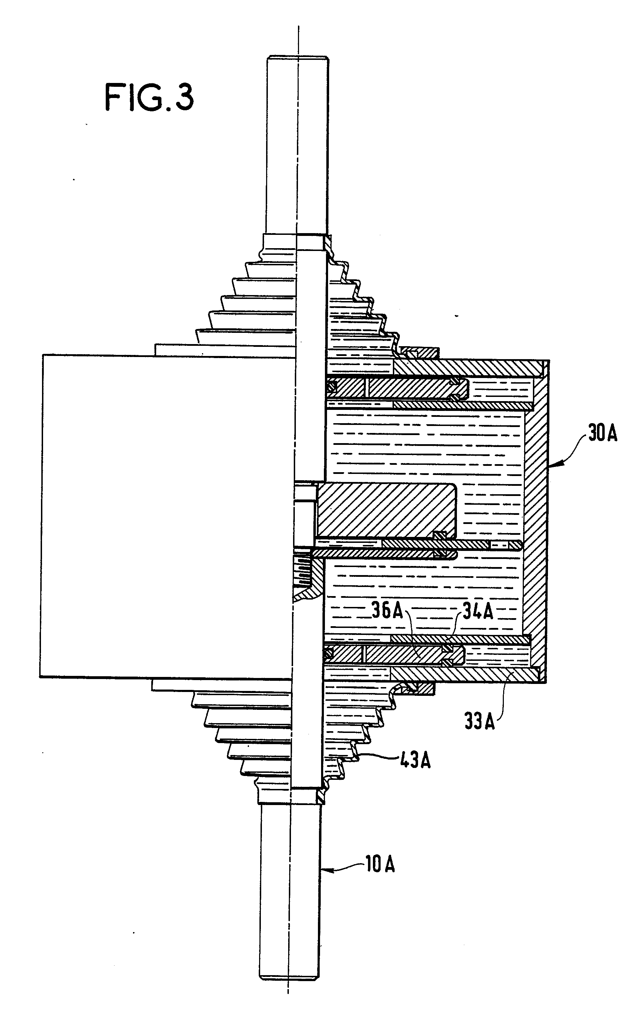

La figure 3 montre un dispositif dans lequel la tige traverse complètement l'enceinte. Ce dispositif est sensiblement équivalent à celui de la figure 2, mais l'enceinte 30A n'est pas fermée dans sa partie inférieure, elle comporte un ensemble plaque extérieure 33A, plaque intérieure 34A, anneau 36A, membrane 43A, équivalent à celui de la partie supérieure.

La figure 4 montre une variante applicable aux dispositifs des figures 1, 2 et 3, cette variante montrant un clapet anti-retour 50 placé dans l'anneau 36 de l'enceinte. Ce clapet est constitué par un orifice 51, une plaque 52 percée d'un orifice central 55 et fixée dans l'anneau 36, une bille 53 et un ressort 54 qui pousse la bille 53 pour fermer l'orifice 51. Bien entendu ce clapet peut être remplacé par un clapet quelconque connu assurant la même fonction, c'est-à-dire une mise en surpression de l'enceinte lors d'un régime vibratoire.

Lors d'une sollicitation, le déplacement de la tige n'est jamais purement axial ou radial, mais l'amortissement peut néanmoins être étudier de manière indépendante selon une direction axiale et selon une direction radiale.

L'amortissement, lors d'un déplacement axial de la tige par rapport à l'enceinte, s'effectue de la manière suivante :

Lorsque la tige s'enfonce dans l'enceinte à vitesse lente, le produit visqueux passe de la chambre 61 à la chambre 62 à travers les orifices 25 sans provoquer un laminage de ce produit visqueux et ce produit visqueux passe ensuite de la chambre 62 à la chambre 63 à travers l'ajutage 38 sans provoquer de laminage.

Tous ces transferts de produit visqueux s'effectuent sans augmentation sensible de pression pour un choix judicieux des dimensions des différents orifices et de la viscosité du produit visqueux. Lorsque la tige remonte à vitesse lente, les transferts de produit visqueux s'effectuent en sens opposé sans provoquer de laminage.

Lorsque la tige s'enfonce dans l'enceinte, à vitesse plus élevée, la chambre 61 est sous haute pression, la chambre 62 est en dépression et il y a laminage du produit visqueux à travers les orifices 25 entraînant l'absorption d'énergie désirée. Lorsque la tige remonte à vitesse élevée, grâce à la présence de l'anneau 36, il y a création d'une zone de haute pression dans la chambre 62, de basse pression dans la chambre 61, et à nouveau laminage du produit visqueux à travers les orifices 25.

Lorsque la tige s'enfonce brutalement dans l'enceinte, la dépression dans la chambre 62 peut devenir suffisante pour engendrer une vaporisation du produit visqueux. Afin d'éviter ce phénomène on installe le clapet anti-retour 50 qui permet une arrivée de fluide de la chambre 63 dans la chambre 62, provoquant ainsi une augmentation générale de la pression dans l'enceinte 30, car il y a simultanément arrivée d'un volume de tige et d'un volume de fluide.

En revanche, lorsque la tige remonte, le clapet 50 se ferme et limite le transfert de produit visqueux qui se fait alors uniquement par l'ajutage 38.

L'amortissement, lors d'un déplacement radial, s'effectue de la manière suivante :

Le piston se déplace radialement par rapport à l'anneau et un cisaillement du produit visqueux a lieu entre l'anneau 24 et les deux parties 21, 22 du piston 20 à travers les jeux de fonctionnement. Par ailleurs, un déplacement circonférenciel du produit visqueux a lieu dans l'espace annulaire 23 et bien entendu ce déplacement peut être contrarié par différents moyens de restriction tels qu'un ressortspirale 53 ou des chicanes, afin d'obliger le produit visqueux à emprunter un parcours plus important et obtenir ainsi une perte d'énergie plus importante.

Le même phénomène se produit dans l'espace annulaire 35.

Bien entendu le nombre d'anneau peut être augmenté, soit dans le piston, soit dans l'enceinte, afin d'augmenter encore l'amortissement.

## Revendications

1/ Dispositif d'amortissement agissant selon les six degrés de ·liberté et comportant une enceinte (30) remplie d'un produit visqueux, une tige (10) solidaire d'un piston (20) logé dans l'enceinte et muni d'au moins un anneau (24) axialement lié à ce piston mais libre radialement par rapport à celui-ci, caractérisé en ce qu'il comporte au moins un anneau (36) axialement lié à l'enceinte mais libre radialement par rapport à celle-ci.

2/ Dispositif selon la revendication 1, caractérisé en ce que l'anneau (36) de l'enceinte est percé d'un ajutage (38).

3/ Dispositif selon la revendication 1 ou 2, caractérisé en ce que l'anneau (36) de l'enceinte comporte un clapet anti-retour (50).

4/ Dispositif selon l'une des revendications 1 à 3, caractérisé en ce que l'anneau (36) de l'enceinte comporte un moyen mécanique de liaison (37) avec la tige, ce moyen mécanique permettant un déplacement linéaire et/ou angulaire de la tige par rapport à l'anneau de l'enceinte.

5/ Dispositif selon l'une des revendications 1 à 4, caractérisé en ce que des moyens de restriction (53, 55) sont placés dans l'espace radial (23, 35) laissé libre par un anneau (24, 36).

6/ Dispositif selon l'une des revendications 1 à 5, caractérisé en ce qu'il comporte un réservoir (41) présentant une surface libre.

7/ Dispositif selon l'une des revendications 1 à 5, caractérisé en ce qu'il comporte une membrane souple (43) fermant l'enceinte.

8/ Dispositif selon l'une des revendications précédentes, caractérisé en ce que le tige (10A) du piston traverse l'enceinte (30), ce dispositif comportant au moins une membrane souple (43A) fermant l'enceinte.

FIG.1

# FIG.2

FIG.3

30A

36A  34A

33A

43A

10A

# FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | FR-A-2 255 508 (PELAT) <br> * En entier * | 1 | F 16 F 9/36 <br> F 16 L 3/20 |
| A | | 2,4,5, 7 | |
| | --- | | |
| Y | FR-A-1 124 841 (CHASSANDE) <br> * Page 1, colonne de gauche, paragraphes 4-6; figure 1 * | 1 | |
| A | | 2,3 | |
| | --- | | |
| A | DE-B-1 177 420 (GRÜNZWEIG) <br> * Colonne 4, lignes 12-61; figure 1 * | 1,4,6 | |
| | --- | | DOMAINES TECHNIQUES RECHERCHES (Int. Cl.4) |
| A | PATENT ABSTRACTS OF JAPAN, vol. 8, no. 146 (M-307)[1583], 7 juillet 1984; & JP-A-59 43 241 (NISSAN JIDOSHA K.K.) 10-03-1984 <br> * Figures 1-7 * | 1,4,7 | F 16 F <br> F 16 L |
| | --- | | |
| A | EP-A-0 025 874 (BILSTEIN) <br> * Page 10, ligne 1 - page 12, ligne 11; figures 2,4 * | 1,4 | |
| | --- | | |
| A | FR-A-2 426 841 (BOGE) | | |
| | ---     -/- | | |

Le présent rapport de recherche a été établi pour toutes les revendications

| Lieu de la recherche <br> LA HAYE | Date d'achèvement de la recherche <br> 17-09-1987 | Examinateur <br> ESPEEL R.P. |
|---|---|---|

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 220 717 (NHK SPRING) | | |
| | --- | | |
| A | FR-A- 802 245 (MERCIER) | | |
| | --- | | |
| A | EP-A-0 129 363 (DUNLOP) | | |
| | ----- | | |

DOMAINES TECHNIQUES RECHERCHES (Int. Cl.4)

Le present rapport de recherche a été établi pour toutes les revendications

| Lieu de la recherche | Date d'achèvement de la recherche | Examinateur |
|---|---|---|
| LA HAYE | 17-09-1987 | ESPEEL R.P. |